# EUROPEAN PATENT SPECIFICATION

(11) **EP 3 145 761 B1**
(45) Date of publication and mention of the grant of the patent: **11.07.2018**
(21) Application number: 15732378.3
(22) Date of filing: 18.05.2015
(51) Int. Cl.: B60R 25/00, G08G 1/017, B60R 25/30, G07B 15/00

(54) **IMPROVED SYSTEM FOR IDENTIFYING A VEHICLE**
VERBESSERTES SYSTEM ZUR IDENTIFIZIERUNG EINES FAHRZEUGS
SYSTÈME AMÉLIORÉ POUR IDENTIFIER UN VÉHICULE

(30) Priority: 20.05.2014 IT BO20140298
(43) Date of publication of application: 29.03.2017
(73) Proprietor: I.CAR S.r.l., 40128 Bologna (IT)
(72) Inventor: MURIANA, Roberto, I-40123 Bologna (IT)
(74) Representative: Provvisionato, Paolo
(86) International application number: PCT/IB2015/053656
(87) International publication number: WO 2015/177713

(56) References cited:
- EP-A1- 1 550 966
- EP-A1- 2 430 624
- EP-A1- 2 713 353
- WO-A1-2011/154187
- WO-A2-2005/052824
- GB-A- 2 357 616
- GB-A- 2 494 910

## Description

The present invention relates, in general, to vehicle identification.

Identification systems for vehicles based on the marking of an alphanumeric code on the glazing of a vehicle, or on its chassis, have been known for some time. A problem of identification systems based on glazing or chassis marking is that the glazing may be replaced, while a chassis marking may be abraded. Additionally, only a small amount of information can be contained in an alphanumeric code of limited length.

Other identification systems, such as that developed by the present applicant and described in European Patent EP 2.430.624, make use of RFID components operating at high frequency (short waves or HF, with a frequency between 3 and 30 MHz) or ultra high frequency (UHF, with a frequency between 300 MHz and 3 GHz), to which are written data that can be read subsequently with a suitable reader, for example a reader in the possession of authorized repair workshops or law enforcement agencies. These identification systems, especially if integrated with glazing or chassis marking systems, are highly resistant to tampering.

The present applicant has made further improvements to an identification system of this type, described in EP 2713353, in order to make it more difficult to counterfeit vehicle identification systems, while simplifying the administrative procedures associated with vehicles, and also allowing the checking of the service history and modifications made to the motor vehicle. In particular, an improved identification system of this type comprises the use of a plurality of RFID components operating at radio frequency. A first RFID component is applied in an easily accessible or visible position in the vehicle for fast data checking. Another RFID component is applied to a registration document or other vehicle identification document. Another RFID component is placed in a hidden location on the vehicle, to prevent undesired identification and tampering with the component. Provision is also made for the use of a smart card that can include its own RFID component. All these RFID components can be interrogated and updated by means of a suitable radio frequency reading and writing device.

The provision of the aforesaid radio frequency reading and writing device imparts considerable flexibility and security of use, by preventing access to the data by unauthorized persons. However, it has been found that the large-scale distribution of the identification system described in EP 2713353 requires the manufacture and distribution of the radio frequency reading and writing device to traders, law enforcement agencies, insurers, loss adjusters, and any other persons requiring access to the information associated with the RFID components located on the vehicle, on the registration document and/or on the smart card. Such a capillary distribution of electronic devices has proved expensive, not only in terms of production costs but also as regards the need to provide for their maintenance and replacement in case of failure.

The object of the present invention is therefore to address the need to produce, distribute and maintain large numbers of radio frequency reading devices, while providing access to the data representing the vehicle by ordinary interrogation operations, and without reducing the levels of security against counterfeiting and fraud.

Another object of the present invention is to provide a simple and economical system which has ample flexibility for integration with advanced functionality, for example with an image databank such as that described in EP 1 550 966 by the present applicant.

The objects are achieved by the claims. Further characteristics and advantages of the invention will become evident from the following detailed description of a preferred embodiment of the invention, which refers to the attached drawings provided purely by way of non-limiting example, in which:
- Figure 1 shows schematically the arrangement of an improved system according to the present invention for identifying a vehicle, and
- Figure 2 shows schematically a kit for providing identification of a vehicle by means of the improved system of the present invention.

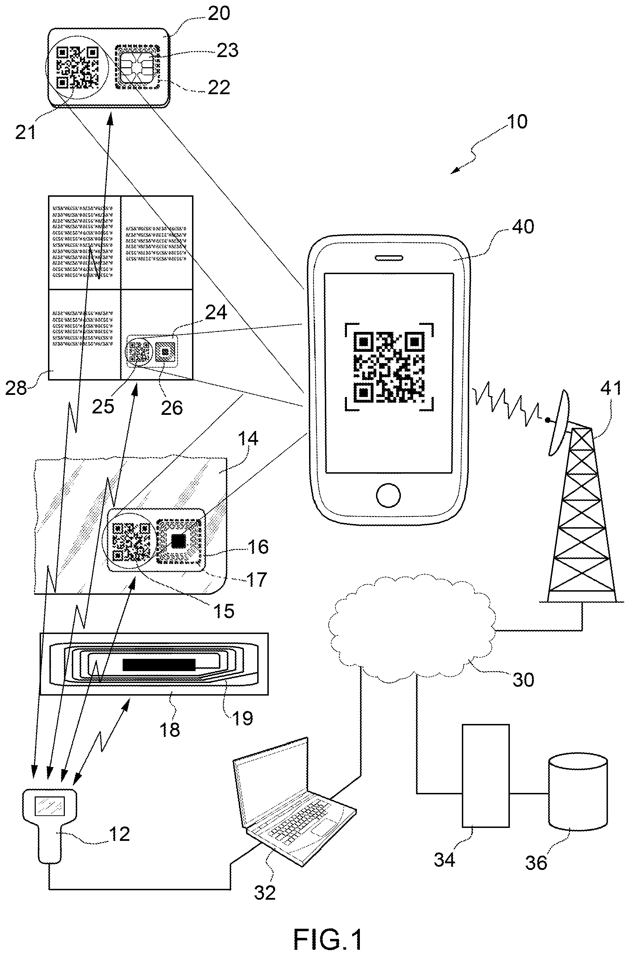

With reference to Figure 1, an illustration is given of an exemplary system for identifying a vehicle according to an embodiment of the present invention. The identification system 10 for a vehicle comprises a multiplicity of identification elements in which at least one unique identification code can be stored, the code preferably being identical for each identification element connected to the same vehicle, but differing from one vehicle to another. Preferably, but not exclusively, the unique identification code differs from the registration number or chassis of the vehicle, and from any other data element from which the data for the vehicle or for the owner can be deduced or derived.

A first accessible identification element 16 is provided, this element being intended for fixing, in use, on an easily accessible point of the vehicle, preferably on one of its glazed elements 14, so that it can be easily identified from the exterior and read without the need for access to the interior of the vehicle. An optically recognizable data code 15, for example a linear or matrix barcode, such as a matrix code marketed under the name Aztec or QR-Code, is reproduced on the accessible identification element 16. This data code 15 reproduces at least the unique identification code.

The accessible identification element 16 may also incorporate an RFID component 17. The RFID component 17 preferably transmits at HF (high frequency), so that it can be read and/or written to at close range by a radio frequency read/write device 12, the details of which are not specified further below, since they can be found in Patent Application EP 2713353 filed by the present applicant. The RFID component 17 may be provided with sufficient memory to be able to store, for example, the following data: the make, the model, the engine capacity, the chassis number, the registration number, the date of first registration, the owner's personal data, the tax code or VAT registration number if the owner is a corporate person, and other data. In this case, the storage capacity of the RFID component 17 is preferably 8 kB. An RFID component 17 with less memory may still be used to store the unique identification code which is also included in the data code 15 of the accessible identification element 16.

A second document identification element 24, preferably similar to the identification element 16, is provided, and is to be applied permanently to the registration document 28 of the vehicle or to a similar document to certify the genuineness of the document. This is because the document identification element 24 makes it impossible or at least extremely difficult to counterfeit the registration document, an act which typically occurs in cases of vehicle theft. The document identification element 24 also comprises a data code 25 and preferably also an integrated RFID component 26, the data storage capacity of which is preferably 8 kB, to allow data identifying the vehicle and its owner to be stored. In this case also, the RFID component 26 could have a smaller data capacity, but still sufficient to store the unique identification code which is also included in the data code 25.

A concealable identification element 18 having an RFID component 19, preferably transmitting and receiving at UHF (ultra high frequency), may also be associated with the vehicle. This concealable identification element 18 can be read/written to at radio frequency at a longer distance, depending on the size of the antenna and the transmitter power relative to the RFID components 17 and 26, which are, respectively, located on the accessible identification element 16 and on the document identification element 24. A read/write distance for the RFID component 19 between about 30 cm and about 100 cm is convenient, enabling the concealable identification element 18 to be advantageously be placed in a concealed location on the vehicle by the owner directly, in such a way that no-one other than he knows the exact location of the component. For example, the concealable identification element 18 can be fixed under one of the seats, or inside the dashboard, in the baggage compartment or in any other concealed position. The greater reading distance of the RFID component 19 enables the content of the component to be read from the exterior of the vehicle, even if its exact position is not known. In order to limit costs, this third RFID component 19 contains encrypted data, but preferably communicates without any encryption protocol. Furthermore, the capacity of the third RFID component 19 can be limited to only 64 bits (or 8 bytes, equivalent to 8 characters), which is sufficient to store, for example, the last eight digits of the chassis number of the vehicle or, more preferably, the unique identification code or a significant portion thereof, or a hash of the unique identification code or of other significant data relating to the vehicle and/or to the owner.

The identification system further comprises a smart card 20 comprising a backing, typically of plastic or other suitable material, on which is reproduced a data code 21 entirely similar to the data codes 15 and 25 reproduced, respectively, on the accessible identification element 16 and the document identification element 24. The smart card 20 preferably also incorporates an RFID component 22, preferably having a microchip and an HF antenna so as to be readable and writable at a close distance. The RFID component 22 is preferably of the type used, for example, in electronic passports; that is to say it has encrypted data within it and communicates by means of an encrypted protocol, with a data storage capacity of up to 8 kbytes. Clearly, in this case also, the data storage capacity of the RFID component 22 can conveniently be reduced in order to reduce the total costs of the identification system, at least the unique identification code being storable in the RFID component.

Additionally, the smart card 20 contains a contact microchip 23 which has a microprocessor which controls the exchange (reading and/or writing) of the data, encrypted and exchanged by communication using an encrypted protocol, as well as storing the data themselves. The data storage capacity of the contact microchip 23 is preferably up to 8 kbytes, but in this case also it would be possible to provide a smaller data storage capacity which is at least sufficient to store at least the unique identification code.

The radio frequency read/write device 12 is programmed so that it is always possible to read the RFID components 17, 19, 22 and 26 as well as the microchip 23. However, it is preferable for it to be programmed in such a way that the read and write device 12 has to be connected to a computer 32 for the purpose of adding new data or modifying stored data in the smart card 20, that is to say in the microchip 23 and in the RFID component 22. The computer 32 is connected through a network, via the internet 30 for example, to a remote node 34 communicating with a database 36. The connections are made by systems of cryptography, authentication, certification and security in general which are known in the field of computer networks. The remote node 34 may consist of a computer, a computer cluster, an embedded system, an all-hardware or all-software system or a combination thereof, or any other solution known to persons skilled in the art relating to the field of networks and databases.

The database 36 contains a plurality of data relating to each vehicle, each being identified by means of its own unique identification code carried by the smart card 20 and on the accessible identification element 16 and the document identification element 24. The respective data codes 21, 15 and 25 can be read by an application that can be activated on a smartphone 40 using its videocamera. The smartphone can communicate in a known way, for example by means of terrestrial antennae 41 or by means of wireless (WiFi) links, or in any other known way, with the internet 30 in order to communicate with the remote node 34 and therefore with the database 36. There are known programs, routines and algorithms for this purpose, which can be integrated into smartphone applications for using the videocamera commonly present in such smartphones for the purpose of optically reading a data code and converting its pattern to alphanumeric data and internet addresses, in order to interrogate a data server integrated into the remote node 34, which can be programmed to execute specific procedures and programs, including the retransmission to the smartphone 40 of significant data, regarding the vehicle identified by the unique identification code, retrieved from the database 36.

According to one operating mode of the identification system described herein, a user, for example a motor vehicle trader, a repair workshop, or a law enforcement agent, who needs to identify a vehicle activates a data interrogation application on a smartphone 40. In a first step, the application activates the videocamera on the smartphone 40 and waits until a data code appears in the frame. When it appears in the frame, the image of the data code is acquired, and the data incorporated therein is decoded from this image. The data extracted from the data code comprise at least the unique code of the vehicle to be identified, which is sent to the remote node 34 which only keeps a map of the data relating to the vehicle associated with the unique identification code.

Depending on the type of user, previously identified on the remote node 34, for example by entering a user name and a password via the smartphone 40, the remote node 34 can execute various applications. For example, if the user is a law enforcement agent, the remote node 34 could send in response to the smartphone 40 data retrieved from the database 36 relating to the vehicle's owner, to the validity of the third-party insurance cover, and any information on reports of theft of the vehicle. On the other hand, if the user is a repair workshop, the data sent to the smartphone 40 from the remote node 34 may relate to the service history. If the user is the owner of the vehicle, the remote node 34 could send in response to the smartphone data relating to the forthcoming expiry of insurance cover and service periods, or data relating to useful contact telephone numbers or addresses, such as those of roadside assistance services. Other data useful to different categories of users may include data on changes of ownership of the vehicle, data on any fire and theft insurance cover, images of the vehicle before and after an insured event, and any other data that may relate to the present condition or the history of the vehicle and its owners.

In response to the identification of the vehicle via the transmission of the unique identification code retrieved from the data code read by means of the smartphone 40, the remote node 34 can also activate a procedure for updating data in the database 36. Examples of data updating are the activation or updating of an insurance policy, the uploading of photographs or video footage relating to the condition of the vehicle, possibly taken by means of the same smartphone, and the updating of data on the ownership or servicing of the vehicle.

In the case of operations requiring greater certainty as to the identification of the vehicle, for example in the case of confirming the retrieval of a stolen vehicle, or providing a guarantee to a buyer wishing to examine the past history of the vehicle, it is possible to carry out radio frequency reading of the data contained in the RFID components of the identification elements, including the reading of the identification code, or a part or a hash of this code, from the concealable identification element 18.

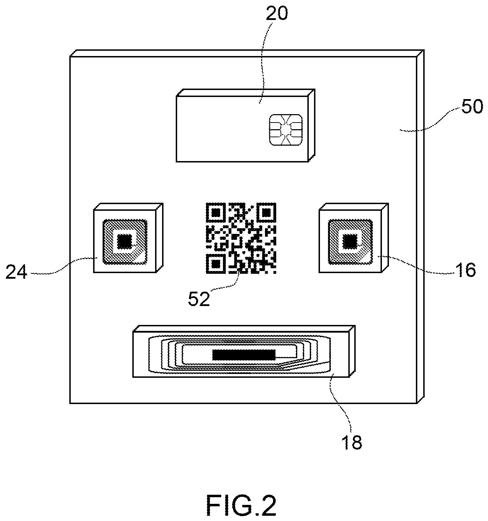

According to another aspect of the present invention, the accessible identification element 16, the document identification element 24, the concealable identification element 18 and the smart card 20 can be supplied in the form of a kit, being for example grouped in a package 50, preferably a sealed plastic package such as that shown in Figure 2. A data code 52, reproducing at least the unique identification code associated with the identification elements 16, 24 and with the smart card 20, is applied to the package 50 in a position clearly visible from the exterior. As mentioned previously, the concealable identification element 18, provided with only the RFID component 19, could also contain a stored version of the unique identification code, but could also contain a portion or a hash of this code, depending on the data storage capacity available in this element. The application of the data code 52 to the package of the kit of identification elements facilitates the activation of a new vehicle registration procedure at the time of sale by a trader, based on the simple identification of the kit in the package 50 and the corresponding activation of a procedure by the remote node which proceeds to create a new data record in the database 36.

Clearly, provided that the principle of the invention is retained, the forms of embodiment and the details of construction can be varied widely from what has been described and illustrated, without departure from the scope of the invention.

## Claims

1. An identification system for a vehicle, comprising:
- at least one accessible identification element (16) to be applied, in use, in an easily accessible or visible position on a vehicle, and an accessible data code (17), reproduced on the accessible identification element (16), containing at least one unique identification code,
- at least one document identification element (24) to be applied, in use, to an identification document of the vehicle, a document data code (25) reproduced on the document identification element (24) containing in an identical way at least the aforesaid unique identification code,
- at least one remote node (34) connected to a database (36) that can be interrogated via a data network (30) by a user terminal (40) capable of optically reading both the accessible data code (17) and the document data code (25) in order to decode the unique identification code thereof, the database (36) being configured for storing data relating to a plurality of vehicles, each identified by its own unique identification code.

2. An identification system according to Claim 1, further comprising at least a concealable identification element (18) to be placed, in use, in a concealed position on the vehicle, comprising an RFID component (19) operating at radio frequency, comprising stored data which comprises the unique identification code or from which this code can be derived.

3. An identification system according to any of the preceding claims, wherein the accessible identification element (16) and/or the document identification element (24) comprises an RFID component (17, 26) operating at radio frequency.

4. An identification system according to Claims 2 and 3, wherein the RFID component (19) of the concealable identification element (18) operates at UHF and the RFID components (17, 26) of the accessible identification element (16) and the document identification element (24) respectively operate at HF.

5. An identification system according to any of the preceding claims, further comprising a smart card identification element (20) on which is reproduced a smart card data code (21) containing in an identical way at least the unique identification code.

6. An identification system according to Claim 5, wherein the smart card identification element (20) further comprises an RFID component (22), preferably operating at HF, and/or a contact microchip (23).

7. An identification kit for a vehicle, comprising:
- at least one accessible identification element (16) to be applied, in use, in an easily accessible or visible position on a vehicle, carrying optical and/or electronic data comprising at least one unique identification code,
- at least one document identification element (24) to be applied, in use, to an identification document of the vehicle, carrying optical and/or electronic data comprising in an identical way at least the unique identification code, the accessible identification element (16) and the document identification element (24) being combined in a package (50) on which is reproduced a data code (52) comprising in an identical way at least the unique identification code.

8. An identification kit according to Claim 7, further comprising a concealable identification element (18) to be placed, in use, in a concealed position on the vehicle, carrying electronic data which comprises the unique identification code, or from which this code can be derived.

9. An identification kit according to either of Claims 7 and 8, further comprising a smart card identification element (20) carrying optical and/or electronic data comprising in an identical way at least the unique identification code.

10. A method for identifying a vehicle by means of the identification system of Claim 1, comprising the steps of:
- applying at least one accessible identification element (16) in an easily accessible or visible position on a vehicle, an accessible data code (17) reproduced on the accessible identification element (16) containing at least one unique identification code,
- applying at least one document identification element (24) to an identification document of the vehicle, a document data code (25), reproduced on the document identification element (24), containing in an identical way at least the aforesaid unique identification code,
- optically reading the accessible data code (17) or the document data code (25) and decoding its unique identification code via a user terminal (40),
- transmitting the unique identification code via a data network (30) to a remote node (34) connected to a database (36) capable of storing data relating to a plurality of vehicles, each identified by its own unique identification code, and processing data, stored or storable in the database (36), which are associated with the unique identification code.

## Patentansprüche

1. Identifikationssystem für ein Fahrzeug, umfassend:
- wenigstens ein zugängliches Identifikationselement (16), das im Einsatz an einer leicht zugänglichen oder sichtbaren Position an einem Fahrzeug anbringbar ist, und ein zugänglicher, an dem zugänglichen Identifikationselement (16) wiedergegebener Datencode (17), der wenigstens einen eindeutigen Identifikationscode beinhaltet,
- wenigstens ein Dokumentenidentifikationselement (24), das im Einsatz an einem Identifikationsdokument des Fahrzeugs anbringbar ist, wobei ein, an dem Dokumentenidentifikationselement (24) wiedergegebener Dokumentendatencode (25) auf eine gleiche Weise wenigstens den besagten eindeutigen Identifikationscode beinhaltet,
- wenigstens einen Remote-Knoten (34), der mit einer Datenbank (36) verbunden ist, die über ein Datennetzwerk (30) durch ein Benutzerendgerät (40) abgefragt werden kann, das dazu fähig ist, sowohl den zugänglichen Datencode (17) als auch den Dokumentendatencode (25) optisch zu lesen, um den eindeutigen Identifikationscode davon zu dekodieren, wobei die Datenbank (36) dazu ausgebildet ist, Daten zu speichern, die in Zusammenhang mit einer Mehrzahl von Fahrzeugen stehen, wobei jedes durch seinen eigenen, eindeutigen Identifikationscode gekennzeichnet ist.

2. Identifikationssystem nach Anspruch 1, weiter umfassend wenigstens ein zu verbergendes Identifikationselement (18), das im Einsatz an eine verborgene Position an dem Fahrzeug platzierbar ist, umfassend eine bei Funkfrequenz arbeitende RFID-Komponente (18), umfassend gespeicherte Daten, welche den eindeutigen Identifikationscode umfasst oder von denen dieser Code abgeleitet werden kann.

3. Identifikationssystem nach einem der voranstehenden Ansprüche, wobei das zugängliche Identifikationselement (16) und/oder das Dokumentenidentifikationselement (24) eine bei Funkfrequenz arbeitende RFID-Komponente (17, 26) umfasst.

4. Identifikationssystem nach den Ansprüchen 2 und 3, wobei die RFID-Komponente (16) des zu verbergenden Identifikationselements (18) bei UHF arbeitet und die RFID-Komponenten (17, 26) des zugänglichen Identifikationselements (16) bzw. des Dokumentenidentifikationselements (24) bei HF arbeiten.

5. Identifikationssystem nach einem der voranstehenden Ansprüche, weiter umfassend ein Chipkartenidentifikationselement (20), auf dem ein Chipkartendatencode (21) wiedergegeben ist, der auf gleiche Weise wenigstens den eindeutigen Identifikationscode beinhaltet.

6. Identifikationssystem nach Anspruch 5, wobei das Chipkartenidentifikationselement (20) weiter eine RFID-Komponente (22), welche vorzugsweise bei HF arbeitet, und/oder einen Kontaktmikrochip (23) umfasst.

7. Identifikationsset für ein Fahrzeug, umfassend:
- wenigstens ein zugängliches Identifikationselement (16), das im Einsatz an einer leicht zugänglichen oder sichtbaren Position an einem Fahrzeug anbringbar ist und das optische und/oder elektronische Daten führt, die wenigstens einen eindeutigen Identifikationscode umfassen,
- wenigstens ein Dokumentenidentifikationselement (24), das im Einsatz an einem Identifikationsdokument des Fahrzeugs anbringbar ist und das optische und/oder elektronische Daten führt, die auf eine gleiche Weise wenigstens den eindeutigen Identifikationscode umfassen, wobei das zugängliche Identifikationselement (16) und das Dokumentenidentifikationselement (24) in einem Paket (50) kombiniert sind, auf dem ein Datencode (52) wiedergegeben ist, der auf eine gleiche Weise wenigstens den eindeutigen Identifikationscode umfasst.

8. Identifikationsset nach Anspruch 7, weiter umfassend ein zu verbergendes Identifikationselement (18), das im Einsatz an einer verborgenden Position an dem Fahrzeug platzierbar ist und das elektronische Daten umfasst, welche den eindeutigen Identifikationscode umfassen oder von denen dieser Code abgeleitet werden kann.

9. Identifikationsset nach Anspruch 7 oder 8, weiter umfassend ein Chipkartenidentifikationselement (20), das optische und/oder elektronische Daten führt, die auf eine gleiche Weise wenigstens den eindeutigen Identifikationscode umfassen.

10. Verfahren zum Identifizieren eines Fahrzeugs mittels dem Identifikationssystem nach Anspruch 1, umfassend die Schritte:
- Anbringen wenigstens eines zugänglichen Identifikationselements (16) an einer leicht zugänglichen oder sichtbaren Position an dem Fahrzeug, wobei ein zugänglicher an dem zugänglichen Identifikationselement (16) wiedergegebener Datencode (17) wenigstens einen eindeutigen Identifikationscode beinhaltet,
- Anbringen wenigstens eines Dokumentenidentifikationselements (24) an einem Identifikationsdokument des Fahrzeugs, wobei ein an dem Dokumentenidentifikationselement (24) wiedergegebener Dokumentendatencode (25) auf eine gleiche Weise wenigstens den besagten eindeutigen Identifikationscode beinhaltet,
- optisches Lesen des zugänglichen Datencodes (17) oder des Dokumentendatencodes (25) und Dekodieren seines eindeutigen Identifikationscodes über ein Benutzerendgerät (40),
- Übertragen des eindeutigen Identifikationscodes über ein Datennetzwerk (30) an einen Remote-Knoten (34), der mit einer Datenbank (36) verbunden ist, die dazu fähig ist, die Daten zu speichern, die in Zusammenhang mit einer Mehrzahl von Fahrzeugen stehen, wobei jedes durch seinen eigenen, eindeutigen Identifikationscode gekennzeichnet ist, und Verarbeiten von in der Datenbank (36) gespeicherter und speicherbarer Daten, die mit dem eindeutigen Identifikationscode in Verbindung stehen.

## Revendications

1. Système d'identification pour véhicules, comprenant :
- au moins un élément d'identification accessible (16) à appliquer en cours d'utilisation à une position facilement accessible ou visible sur un véhicule, et un code de données accessibles (17), reproduit sur l'élément d'identification accessible (16), contenant au moins un code d'identification unique,
- au moins un élément d'identification de document (24) à appliquer en cours d'utilisation sur un document d'identification du véhicule, un code de données de document (25) reproduit sur l'élément d'identification de document (24) contenant de manière identique au moins ledit code d'identification unique,
- au moins un noeud distant (34) connecté à une base de données (36) qui peut être interrogée via un réseau de données (30) par un terminal d'utilisateur (40) capable de lire optiquement à la fois le code de données accessibles (17) et le code de données de document (25) afin de décoder leur code d'identification unique, la base de données (36) étant conçue pour stocker des données concernant une pluralité de véhicules, chacun identifié par son propre code d'identification unique.

2. Système d'identification selon la revendication 1, comprenant en outre au moins un élément d'identification dissimulable (18) à placer, en cours d'utilisation, dans une position dissimulée sur le véhicule, comprenant un composant RFID (19) fonctionnant à la fréquence radio, comprenant des données stockées qui contiennent le code d'identification unique ou dont ce code peut être dérivé.

3. Système d'identification selon l'une quelconque des revendications précédentes, dans lequel l'élément d'identification accessible (16) et/ou l'élément d'identification de document (24) comprennent un composant RFID (17,26) fonctionnant à la fréquence radio.

4. Système d'identification selon les revendications 2 et 3, dans lequel dans lequel le composant RFID (19) de l'élément d'identification dissimulable (18) fonctionne à UHF et les composants RFID (17,26) de l'élément d'identification accessible (16) et de l'élément d'identification de documents (24) fonctionnent respectivement à HF.

5. Système d'identification selon l'une quelconque des revendications précédentes, comprenant en outre un élément d'identification (20) sur lequel est reproduit un code de données de carte intelligente (21) contenant de manière identique au moins le code d'identification unique.

6. Système d'identification selon la revendication 5, dans lequel l'élément d'identification de carte intelligente (20) comprend en outre un composant RFID (22), fonctionnant de préférence à HF, et/ou une micropuce de contact (23).

7. Kit d'identification pour véhicules, comprenant :
- au moins un élément d'identification accessible (16) à appliquer en cours d'utilisation à une position facilement accessible ou visible sur un véhicule, comportant des données optiques et/ou électroniques comprenant au moins un code d'identification unique,
- au moins un élément d'identification de document (24) à appliquer en cours d'utilisation sur un document d'identification du véhicule, comportant des données optiques et/ou électroniques comprenant de manière identique au moins un code d'identification unique, l'élément d'identification accessible (16) et le document identification du document (24) étant combinés dans un ensemble (50) sur lequel est reproduit un code de données (52) comprenant de manière identique au moins le code d'identification unique.

8. Kit d'identification selon la revendication 7, comprenant en outre un élément d'identification dissimulable (18) à placer en cours d'utilisation, dans une position dissimulée sur le véhicule, comportant des données électroniques qui comprennent le code d'identification unique ou dont ce code peut être dérivé.

9. Kit d'identification selon l'une quelconque des revendications 7 et 8, comprenant en outre un élément d'identification de carte intelligente (20) comportant des données optiques et/ou électroniques comprenant de manière identique au moins le code d'identification unique.

10. Procédé d'identification d'un véhicule au moyen du système d'identification selon la revendication 1, comprenant les étapes suivantes :
- l'application d'au moins un élément d'identification accessible (16) à une position facilement accessible ou visible sur un véhicule, un code de données accessibles (17) reproduit sur l'élément d'identification accessible (16) contenant au moins un code d'identification unique,
- l'application d'au moins un élément d'identification de document (24) à un document d'identification du véhicule, un code de données de document (25) reproduit sur l'élément d'identification de document (24), contenant de manière identique au moins ledit code d'identification unique,
- la lecture optique du code de données accessibles (17) ou du code de données de document (25) et le décodage de son code d'identification unique via un terminal d'utilisateur (40),
- la transmission du code d'identification unique via un réseau de données (30) à un noeud distant (34) connecté à une base de données (36) capable de stocker des données relatives à une pluralité de véhicules, chacun identifié par son code d'identification unique, et le traitement des données stockées ou pouvant être stockées dans la base de données (36) qui sont associées au code d'identification unique.
